# EUROPÄISCHE PATENTSCHRIFT

(11) **EP 3 502 528 B1**
(45) Veröffentlichungstag und Bekanntmachung des Hinweises auf die Patenterteilung: **05.08.2020**
(21) Anmeldenummer: 17465599.3
(22) Anmeldetag: 20.12.2017
(51) Int. Cl.: F16K 1/44, F16K 37/00, F16K 31/04, F16K 31/53, F16K 31/524, F16K 1/50, F16K 11/04, F02M 26/65, F16K 27/08

(54) **VENTIL**
VALVE
SOUPAPE

(43) Veröffentlichungstag der Anmeldung: 26.06.2019
(73) Patentinhaber: Vitesco Technologies GmbH, 30165 Hannover (DE)
(72) Erfinder: Petca, Eduard Cornel, 300693 Timisoara (RO)

(56) Entgegenhaltungen:
- US-A- 5 197 508
- US-A1- 2016 369 912

## Beschreibung

Gegenstand der Erfindung ist ein Ventil mit den Merkmalen des Oberbegriffes von Patentanspruch 1.

Solche Ventile werden zum Öffnen und Verschließen von Abgasleitungen in Kraftfahrzeugen eingesetzt und sind somit bekannt. Wichtig für die Funktion solcher Ventile ist die Dichtheit, mit der das Ventil die Leitung verschließt. Gerade bei Gasen ist das Erreichen einer geringen Leckrate mit hohem Aufwand verbunden. Entscheidend dabei ist, die Position des Schließkörpers zu bestimmen, um so das Öffnen und Schließen des Ventils regeln zu können. Dabei wird der Antrieb regelmäßig von einem Elektromotor und einem Getriebe gebildet. Das Getriebe dient dazu, die Drehbewegung des Elektromotors in eine translatorische Bewegung umzuwandeln, damit der mit dem Getriebe verbundene Stößel den Schließkörper linear bewegen kann. Zur Positionsbestimmung des Schließkörpers wird ein Magnetsensor eingesetzt. Hierzu ist an dem Stößel ein Magnet befestigt und im Abstand dazu ein Sensor. Die Veränderung des Abstandes zwischen Magnet und Sensor wird dabei für die Positionsbestimmung genutzt. Nachteilig dabei ist, dass sich der Abstand nicht nur durch die gewollte Bewegung von Antrieb, Stößel und Schließkörper bestimmt. Durch Einflüsse beim Betrieb des Ventils, z.B. durch den Antrieb, Strömung des Mediums durch das Gehäuse und um den Schließkörper herum führt der Stößel nicht nur die gewünschte lineare Bewegung aus. Es kommt dabei auch zu kleineren Drehbewegungen um die Stößelachse. Diese Drehbewegungen führen gleichfalls zu einer Veränderung des Abstands zwischen Magnet und Sensor und verfälschen somit die Positionsbestimmung.

Aus der US 2016/0369912 A1 ist ein Ventil bekannt, das die Merkmale des Oberbegriffes von Patentanspruch 1 aufweist. Hierbei ist der Ventilstößel mit einem zusätzlichen Bauteil verbunden, welches derart ausgebildet ist, dass Drehbewegungen des Stößels verhindert werden.

Eine ähnliche Ausführungsform eines Ventils ist aus der US 5 197 508 bekannt. Auch bei dieser Ausführungsform weist der Stößel zusätzliche Bauteile auf, welche Drehbewegungen des Stößels vehindern.

Der Erfindung liegt die Aufgabe zugrunde, ein Ventil zu schaffen, welches ein fehlerfreies Öffnen und Schließen erlaubt. Der Aufwand für eine fehlerfreie Regelung soll möglichst gering sein und das Ventil soll dabei einfach aufgebaut sein.

Diese Aufgabe wird erfindungsgemäß bei einem Ventil der angegebenen Art durch die kennzeichnenden Merkmale von Patentanspruch 1 gelöst.

Bei dem Ventil ist der Stößel mit einem zusätzlichen Bauteil verbunden, welches derart ausgebildet ist, dass Drehbewegungen des Stößels verhindert werden. Indem die Drehbewegungen des Stößels verhindert werden, wird der Abstand des Magneten ausschließlich durch die lineare Bewegung des Stößels definiert. Störende Bewegungen, welche die Position des Magneten und damit den Abstand zum Sensor in unzulässiger Weise verfälschen, werden so eliminiert. Mit der Anordnung des zusätzlichen Bauteils erhöht sich der Aufwand nur in geringer Weise. Aufwendige Überarbeitungen des Antriebs oder der Anbindung des Stößels um die unerwünschten Drehbewegungen zu vermeiden, werden damit vermieden. Da solche Überarbeitungen den Aufwand im Aufbau und der Fertigung, insbesondere im Hinblick auf Form- und Lagetoleranzen stark erhöhen, wurde mit dem erfindungsgemäßen Ventil eine besonders kostengünstige Lösung gefunden, die trotz des zusätzlichen Bauteils den einfachen Aufbau des Ventils erhält.

Das zusätzliche Bauteil weist dabei einen flexiblen Bereich auf, der eine Bewegung des zusätzlichen Bauteils derart zulässt, dass dieses Bauteil einer linearen Bewegung des Stößels folgt. Das hat den Vorteil, dass das zusätzliche Bauteil eine Drehbewegung des Stößels verhindert, ohne dabei die lineare Bewegung des Stößels zu beeinträchtigen. Der flexible Bereich wirkt nach Art einer Feder, der es ermöglicht, einem Ende des zusätzlichen Bauteils fest fixiert zu sein, während das andere Ende der Stößelbewegung folgt.

Eine sichere und langzeitstabile Verbindung des zusätzlichen Bauteils mit dem Stößel wird erreicht, wenn das zusätzliche Bauteil mit dem Stößel verschweißt ist.

Durch eine feste Verbindung des zusätzlichen Bauteils mit dem Gehäuse oder mit einem fest mit dem Gehäuse in Kontakt stehenden Bauteil wird gemäß einer anderen vorteilhaften Ausgestaltung gewährleistet, dass das zusätzliche Bauteil unter allen Betriebsbedingungen zuverlässig arbeitet.

Eine derartige Verbindung lässt sich in besonders einfacher Weise dadurch erreichen, dass das dem Stößel abgewandte Ende des zusätzlichen Bauteils in eine Bohrung des Gehäuses oder mit eines fest mit dem Gehäuse in Kontakt stehenden Bauteils eingepresst ist.

In einer anderen Ausgestaltung besitzt das Bauteil einen Querschnitt, der derart ausgerichtet ist, dass er eine lineare Bewegung des Stößels zulässt und eine Drehbewegung des Stößels um seine Längsachse behindert. Der Vorteil besteht darin, dass allein durch die geometrische Dimensionierung des Querschnitts ein fehlerfreies Funktionieren des Magnetsensors erreicht wird.

In einer besonders einfachen Ausgestaltung ist der Querschnitt rechteckig und die Längsseiten des Querschnitts sind senkrecht zur Längsachse des Stößels ausgerichtet. Diese Querschnittsausbildung zeichnet sich durch große Einfachheit aus und ist damit sehr kostengünstig. Insbesondere, wenn die beiden längeren Seiten des Rechteckquerschnitts groß gegenüber den beiden kürzeren Seiten sind, lässt sich das gewünschte Bewegungsverhalten des zusätzlichen Bauteils einfach erreichen. Es hat sich gezeigt, dass ein Verhältnis von langer Seite zu kurzer Seite von 20:1 bis 5:1 besonders geeignet ist.

An einem Ausführungsbeispiel wird die Erfindung näher erläutert. Dabei zeigen
- Fig. 1: ein erfindungsgemäßes Ventil,
- Fig. 2: eine vergrößerte Darstellung des Ventils nach Fig. 1 und
- Fig. 3: das zusätzliche Bauteil nach Fig. 1.

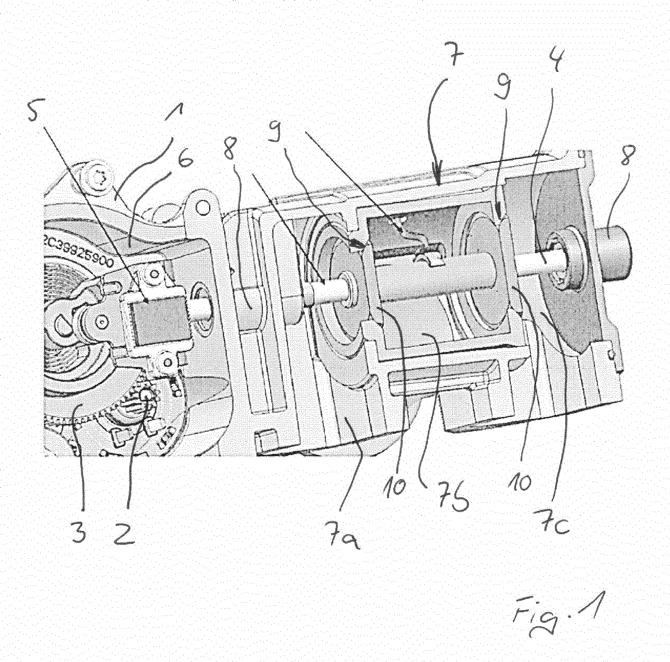

Das Ventil in Figur 1 besteht aus einem Gehäuse 1, in dem ein Elektromotor 2 angeordnet ist. Mittels eines Getriebes 3 wird die Drehbewegung des Elektromotors 2 in eine lineare Bewegung eines Stößels 4 umgewandelt. Am Getriebe 3 ist ein Sensor 5 angeordnet, der mit einem am Stößel 4 befestigten Magneten zusammenwirkt. Der Stößel 4 erstreckt sich von der Getriebekammer 6 bis in eine Ventilkammer 7, wobei der Stößel 4 an zwei Stellen 8 gelagert ist. Die Ventilkammer 7 besteht aus drei hintereinander liegenden Teilkammern 7a, 7b, 7c, die jeweils durch einen Ventilsitz 9 voneinander getrennt sind. Zwei Schließkörper 10 sind so auf dem Stößel 4 angeordnet, dass sie sich bei einer Bewegung des Stößels 4 an den jeweiligen Ventilsitz anlegen und die Öffnung abdichten oder vom Ventilsitz wegbewegen und die Öffnung somit freigeben, so dass ein Gas von einer Ventilkammer in die andere strömen kann.

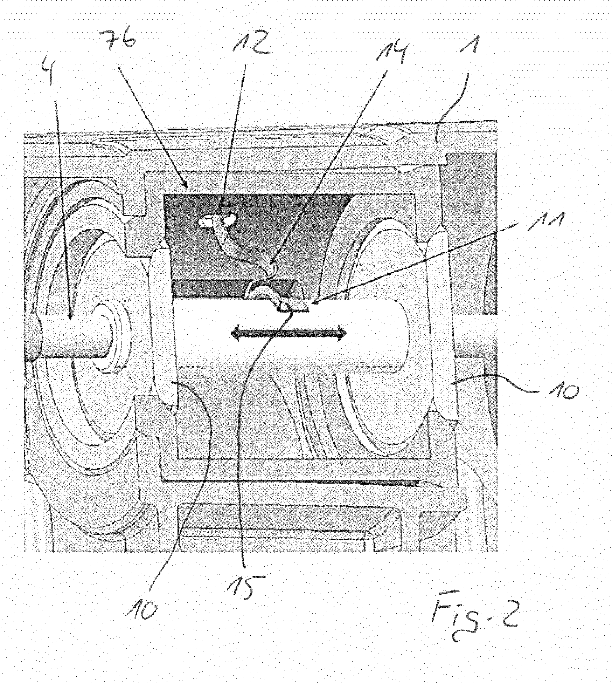

Figur 2 zeigt den Stößel 4 mit den beiden Schließkörpern 10. Mit einem Pfeil ist die lineare Bewegung des Stößels 4 dargestellt. Zwischen beiden Schließkörpern 10 ist am Stößel 4 ein zusätzliches Bauteil 11 angeordnet, indem das Bauteil 11 mit einem Ende 15 mit dem Stößel 4 verschweißt ist. Das Gehäuse 1 in der Ventilkammer 7b besitzt eine Bohrung 12, in die ein Ende 13 des Bauteils 11 eingepresst ist. Das Bauteil 11 besitzt einen flexiblen Bereich 14, der es dem Bauteil ermöglicht, dass das Ende 15 der linearen Bewegung des Stößels 4 folgt. Gleichzeitig verhindert das mit dem Stößel 4 verschweißte Ende 15, dass sich der Stößel um seine Längsachse drehen kann.

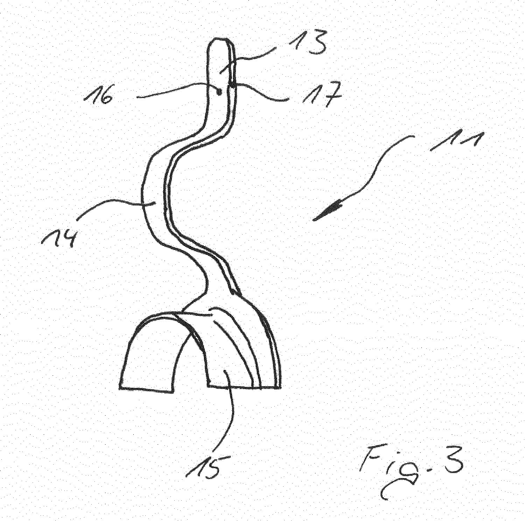

Fig. 3 zeigt das Bauteil 11 mit dem Ende 13, welches fest eingepresst wird und so das Bauteil 11 fixiert. Das Ende 15 ist halbschalenförmig ausgebildet, so dass es den Stößel 4 umgreift. Diese größere Fläche erlaubt ein sicheres Verschweißen mit dem Stößel 4. Der flexible Bereich 14 ermöglicht das genannte Bewegungsverhalten. Unterstützt wird dieses Bewegungsverhalten durch den rechteckförmigen Querschnitt des Bauteils 11. Die längeren Seiten 16 sind quer zur Längsachse des Stößels 4. Die beiden kürzeren 17 Seiten des rechteckförmigen Querschnitts sind parallel zur Längsachse des Stößels ausgerichtet. Das Verhältnis von langer Seite zu kurzer Seite beträgt 7:1.

## Patentansprüche

1. Ventil mit einem Gehäuse (1), einem Antrieb, einem mit dem Antrieb verbundenen Stößel (4), einem mit dem Stößel (4) verbundenen Schließkörper (10), der mit einem Ventilsitz (9) zusammenwirkt, einem an einem Ende des Stößels (4) angeordneten Magneten und einem gegenüber dem Magneten angeordneten Sensor (5), wobei der Stößel (4) mit einem zusätzlichen Bauteil (11) verbunden ist, welches derart ausgebildet ist, dass Drehbewegungen des Stößels (4) verhindert werden, **dadurch gekennzeichnet, dass** das zusätzliche Bauteil (11) einen flexiblen Bereich (14) aufweist, der eine Bewegung des zusätzlichen Bauteiles (11) derart zulässt, dass das zusätzliche Bauteil (11) einer linearen Bewegung des Stößels (4) folgt.

2. Ventil nach Anspruch 1, **dadurch gekennzeichnet, dass** das zusätzliche Bauteil (11) mit dem Stößel (4) verschweißt ist.

3. Ventil nach Anspruch 1 oder 2, **dadurch gekennzeichnet, dass** das zusätzliche Bauteil (11) mit dem Gehäuse (1) oder mit einem fest mit dem Gehäuse in Kontakt stehenden Bauteil (9) verbunden ist.

4. Ventil nach Anspruch 3, **dadurch gekennzeichnet, dass** das dem Stößel (4) abgewandte Ende (13) des zusätzlichen Bauteils (11) in eine Bohrung (12) des Gehäuses (1) oder mit eines fest mit dem Gehäuse in Kontakt stehenden Bauteils (9) eingepresst ist.

5. Ventil nach zumindest einem der vorhergehenden Ansprüche, **dadurch gekennzeichnet, dass** das zusätzliche Bauteil (11) einen Querschnitt besitzt, der derart ausgerichtet ist, dass er eine lineare Bewegung des Stößels (4) zulässt und eine Drehbewegung des Stößels (4) um seine Längsachse behindert.

6. Ventil nach zumindest Anspruch 5, **dadurch gekennzeichnet, dass** der Querschnitt rechteckig ist und die Längsseiten (16) des Querschnitts senkrecht zur Längsachse des Stößels (4) ausgerichtet sind.

7. Ventil nach zumindest Anspruch 6, **dadurch gekennzeichnet, dass** das Verhältnis langer Seite (16) zu kurzer Seite (17) des rechteckförmigen Querschnitts 20:1 bis 5:1 beträgt.

## Claims

1. Valve having a housing (1), a drive, a tappet (4) which is connected to the drive, a closing body (10) which is connected to the tappet (4) and interacts with a valve seat (9), a magnet which is arranged at one end of the tappet (4), and a sensor (5) which is arranged opposite the magnet, wherein the tappet (4) is connected to an additional component (11) which is designed in such a way that rotational movements of the tappet (4) are prevented, **characterized in that** the additional component (11) has a flexible region (14) which permits a movement of the additional component (11) in such a way that the additional component (11) follows a linear movement of the tappet (4).

2. Valve according to Claim 1, **characterized in that** the additional component (11) is welded to the tappet (4).

3. Valve according to Claim 1 or 2, **characterized in that** the additional component (11) is connected to the housing (1) or to a component (9) which is fixedly in contact with the housing.

4. Valve according to Claim 3, **characterized in that** that end (13) of the additional component (11) which faces away from the tappet (4) is pressed into a bore (12) in the housing (1) or in a component (9) which is fixedly in contact with the housing.

5. Valve according to at least one of the preceding claims, **characterized in that** the additional component (11) has a cross section which is oriented in such a way that it permits a linear movement of the tappet (4) and hinders a rotational movement of the tappet (4) about the longitudinal axis of the latter.

6. Valve according to at least Claim 5, **characterized in that** the cross section is rectangular, and the longitudinal sides (16) of the cross section are oriented perpendicular to the longitudinal axis of the tappet (4).

7. Valve according to at least Claim 6, **characterized in that** the ratio of long side (16) to short side (17) of the rectangular cross section amounts to 20:1 to 5:1.

## Revendications

1. Soupape comprenant un boîtier (1), un entraînement, une tige poussoir (4) connectée à l'entraînement, un corps de fermeture (10) connecté à la tige poussoir (4), qui coopère avec un siège de soupape (9), un aimant disposé à une extrémité de la tige poussoir (4) et un capteur (5) disposé à l'opposé de l'aimant, la tige poussoir (4) étant connectée à un composant supplémentaire (11) qui est réalisé de telle sorte que des mouvements de rotation de la tige poussoir (4) soient empêchés, **caractérisée en ce que** le composant supplémentaire (11) présente une région flexible (14) qui permet un mouvement du composant supplémentaire (11) de telle sorte que le composant supplémentaire (11) suive un mouvement linéaire de la tige poussoir (4).

2. Soupape selon la revendication 1, **caractérisée en ce que** le composant supplémentaire (11) est soudé à la tige poussoir (4) .

3. Soupape selon la revendication 1 ou 2, **caractérisée en ce que** le composant supplémentaire (11) est connecté au boîtier (1) ou à un composant (9) fixement en contact avec le boîtier.

4. Soupape selon la revendication 3, **caractérisée en ce que** l'extrémité (13) du composant supplémentaire (11) opposée à la tige poussoir (4) est pressée dans un alésage (12) du boîtier (1) ou d'un composant (9) fixement en contact avec le boîtier.

5. Soupape selon au moins l'une quelconque des revendications précédentes, **caractérisée en ce que** le composant supplémentaire (11) présente une section transversale qui est orientée de manière à permettre un mouvement linéaire de la tige poussoir (4) et à empêcher un mouvement de rotation de la tige poussoir (4) autour de son axe longitudinal.

6. Soupape selon au moins la revendication 5, **caractérisée en ce que** la section transversale est rectangulaire et les côtés longitudinaux (16) de la section transversale sont orientés perpendiculairement à l'axe longitudinal de la tige poussoir (4) .

7. Soupape selon au moins la revendication 6, **caractérisée en ce que** le rapport du côté long (16) au côté court (17) de la section transversale rectangulaire est de 20:1 à 5:1.
